(19) Europäisches Patentamt
European Patent Office
Office européen des brevets

(11) **EP 4 521 355 A1**

(12) **EUROPEAN PATENT APPLICATION**

(43) Date of publication:
**12.03.2025 Bulletin 2025/11**

(21) Application number: **23306499.7**

(22) Date of filing: **08.09.2023**

(51) International Patent Classification (IPC):
**G06T 17/20** (2006.01)     **G06T 19/20** (2011.01)

(52) Cooperative Patent Classification (CPC):
**G06T 17/20; G06T 19/20;** G06T 2210/41;
G06T 2210/56; G06T 2219/2021

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **Dassault Systèmes**
**78140 Vélizy-Villacoublay (FR)**

(72) Inventors:
• **NOBLET, Baptiste**
  **38031 Grenoble (FR)**
• **SARTHOU, Benoit**
  **78946 Vélizy-Villacoublay (FR)**
• **GUILLEMAIN, Antoine**
  **78946 Vélizy-Villacoublay (FR)**
• **GAZERES, Nicolas**
  **78946 Vélizy-Villacoublay (FR)**

(74) Representative: **Bandpay & Greuter**
**11 rue Christophe Colomb**
**75008 Paris (FR)**

(54) **CORRECTING TOPOLOGICAL DEFECTS ON A SURFACE MESH REPRESENTING AN ORGAN**

(57)    The disclosure notably relates to a computer-implemented method for correcting topological defects on a surface mesh representing an organ homeomorphic to a sphere and obtained from a medical image. The method comprises applying a transformation to the surface mesh distributing positions of vertices of the surface mesh into a spherical point cloud and maintaining vertices neighborhoods. The method also comprises meshing the points of the spherical point cloud according to a triangular surface mesh presenting: the union of the triangles of the triangular surface mesh forms the convex hull of the points of the spherical point cloud and the intersection between any first triangle of the triangular surface mesh and any second triangle intersecting the first triangle is a vertex of the first triangle or an edge of the first triangle. The method also comprises mapping back the meshing onto the vertices of the surface mesh by reversing the transformation.

| Applying a transformation to the surface mesh | S10 |
| Meshing the points of the spherical point cloud according to a triangular surface mesh | S20 |
| Mapping back the meshing onto the vertices of the surface mesh by reversing the transformation | S30 |

**FIG. 1**

**Description**

**TECHNICAL FIELD**

The disclosure relates to the field of computer programs and systems, and more specifically to a method, system and program for correcting topological defects on a surface mesh representing an organ that is homeomorphic to a sphere.

**BACKGROUND**

A number of systems and programs exist for performing 3D reconstruction of organs with a predetermined topology, such as being homeomorphic to a sphere. This is the case, for example, of the brain, eyes. The 3D reconstruction, e.g., cortical surface reconstruction in the case of the brain, allows for the analysis of the morphology of the organ, and may be used for diagnosis and pathology monitoring, when the 3D reconstruction is performed on a patient.

Some known methods for 3D reconstruction of organs homeomorphic to a sphere may be described as following a top-down approach. Said methods start with an initial surface with the chosen topology (e.g., a sphere) and deform the initial surface so that it matches the cortical surface. The deformation may be performed directly, e.g., using intensity information from an input image, for example using active contours, or to an already reconstructed surface which may be topologically incorrect, e.g., if there is noise present in the input image.

Methods following the top-down may be slow to provide an acceptable result due to taking a long time to optimize an objective function. For example, in cortical surface reconstruction, as the cortical surface is convoluted, the regularity imposed on surface update during the construction process tends to filter high frequencies of the mesh and leads to inaccurate representation of the deep structures of the brain.

In addition, the deformation of the sphere made by those methods may include sampling of heterogeneous vertices, which result in a non-uniform mesh resolution across the surface reconstruction, which can be memory inefficient.

Moreover, automated segmentation methods applied on medical images may introduce artifacts on the image in the form of bridges and gaps. This introduces topological defects when reconstructing an organ homeomorphic to the sphere from the segmentation.

Other methods may use a bottom-up approach, correct topology of an already generated surface. Fore example, known methods may perform topology correction algorithm based on a re-tessellation approach, optimized by genetic exploration. However, this requires looping through topological defects, which can be inefficient when the number of defects is large.

Within this context, there is still a need for an improved method for correcting topological defects on a surface mesh representing an organ that is homeomorphic to a sphere.

**SUMMARY**

It is therefore provided a computer-implemented method for correcting topological defects on a surface mesh representing an organ. The organ is homeomorphic to a sphere. The surface mesh is obtained from a medical image.

The method comprises applying a transformation to the surface mesh, the transformation distributing positions of vertices of the surface mesh into a spherical point cloud and maintaining, in the distribution, vertices neighborhoods of the surface mesh.

The method also comprises meshing the points of the spherical point cloud according to a triangular surface mesh, the triangular surface mesh presenting the following properties:

- the union of the triangles of the triangular surface mesh forms the convex hull of the points of the spherical point cloud, and
- the intersection between any first triangle of the triangular surface mesh and any second triangle of the triangular surface mesh intersecting the first triangle is a vertex of the first triangle or an edge of the first triangle.

The method also comprises mapping back the meshing onto the vertices of the surface mesh by reversing the transformation.

The method may comprise one or more of the following:

- the method further comprises identifying outlier vertices that result from the reversed transformation;
- identifying outlier vertices comprises detecting vertices that are close on the meshing of the points of the spherical point cloud with respect to a Euclidean distance on the sphere and which are remote in the mesh resulting from the reversed transformation with respect to the Euclidean distance on the mesh;

- the method further comprises computing ratios between lengths of edges linking vertices on the meshing of the points of the spherical point cloud and lengths of edges linking vertices on the reversed transformation, the detecting comprising determining if the ratios are above a predetermined threshold;
- the method further comprises processing the identified outlier vertices, the processing reducing the distance between the identified outlier vertices with respect to remaining vertices of the reversed transformation;
- the processing comprises one or more of a smoothing of the identified outlier vertices or a cropping of the identified outlier vertices;
- the method further comprises selecting vertices from the reversed transformation remaining from the identified outlier vertices, and re-meshing the selected vertices according to the topology of the surface mesh;
- applying the transformation comprises, iteratively inflating the mesh into a spherical point cloud, using an inflation transformation constrained by a vertex neighborhood preservation constraint;
- the inflation transformation is of the type, for each current vertex v:

$$C_{t+1}(v) = C_t(v) + \left( \boldsymbol{d}_v + \langle \boldsymbol{d}_v | \boldsymbol{n}_C(v) \rangle \, \boldsymbol{n}_S(v) + \lambda_r \frac{r_0 - |\boldsymbol{r}_v|}{r_0} \boldsymbol{r}_v \right),$$

wherein

$$\boldsymbol{d}_v = \frac{1}{\#\mathcal{N}_A(v)} \sum_{v' \in \mathcal{N}_A(v)} C_t(v') - C_t(v),$$

$$\boldsymbol{r}_v = C_t(v) - o_{t+1},$$

where A denotes the surface mesh, v denotes the current vertex, $\mathcal{N}_A(v)$ represents the vertex neighborhood of the current vertex v in the surface mesh $A$, $v'$ denotes a neighbor vertex of the set $\mathcal{N}_A(v)$, $\#\mathcal{N}_A(v)$ denotes the number of vertices in the set $\mathcal{N}_A(v)$, $C_t(v)$ and $C_t(v')$ denote positions of the vertices v and v' positioned on the spherical point cloud S, $C_{t+1}(v)$ denotes the updated position of vertex $v$, $o_{t+1} = \frac{1}{\#A} \sum_{v \in A} C_t(v)$ denotes an average position of vertices on the spherical point cloud S, $\boldsymbol{n}_S(v)$ denotes an outward normal of the current vertex $v$, $\langle \boldsymbol{d}_v | \boldsymbol{n}_C(v) \rangle$ denotes the inner product between $\boldsymbol{d}_v$ and $\boldsymbol{n}_C(v)$, $\lambda_r$ and $r_0$ are predetermined parameters; and
- the vertex neighborhood preservation constraint is of the type:

$$v' \notin \mathcal{N}_A(v) \Rightarrow d\big(C(v), C(v')\big)$$

$$\geq \min\{d\big(C(v), C(v_1)\big), d\big(C(v), C(v_2)\big)\},$$

wherein A denotes the surface mesh, v denotes a current vertex, $\mathcal{N}_A(v)$ represents the vertex neighborhood of the current vertex v in the surface mesh $A$, $v_1$ and $v_2$ denote vertices belonging to the vertex neighborhood $\mathcal{N}_A(v)$ of the current vertex $v$, $v'$ denotes a vertex not belonging to the intersection of the vertices neighborhoods $\mathcal{N}_A(v_1)$ and $\mathcal{N}_A(v_2)$, and $d(\cdot, \cdot)$ is a distance function.

It is further provided an obtention method for obtaining a surface model representing an organ that is homeomorphic to a sphere. The obtention method comprises obtaining a medical image of the organ. The obtention method also comprises obtaining a surface mesh from the medical image. The obtention method also comprises correcting topological defects on the surface mesh according to the method.

Obtaining the surface mesh may comprise obtaining a tissue mask from the medical image and applying a mesh reconstruction method to the tissue mask.

It is further provided a computer program comprising instructions for performing the method and/or the obtention method.

It is further provided a computer readable storage medium having recorded thereon the computer program.

It is further provided a system comprising a processor coupled to a memory, the memory having recorded thereon the computer program.

**BRIEF DESCRIPTION OF THE DRAWINGS**

Non-limiting examples will now be described in reference to the accompanying drawings, where:

- FIG. 1 shows a flowchart of an example of the method;
- FIG. 2 shows an example of the system; and
- FIG.s 3 to 16 illustrate the method.

**DETAILED DESCRIPTION**

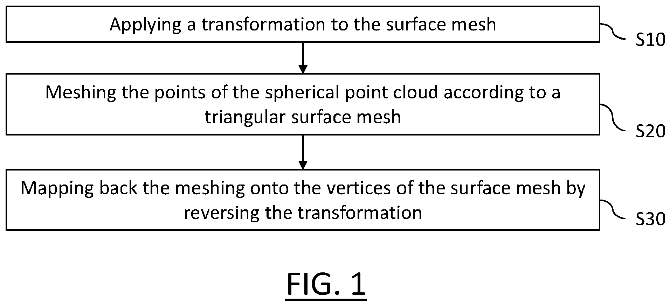

With reference to the flowchart of FIG. 1, it is proposed a computer-implemented method for correcting topological defects on a surface mesh. The surface mesh represents an organ. The organ is homeomorphic to a sphere. The surface mesh is obtained from a medical image. The method (also called the "correction method") comprises applying S10 a transformation to the surface mesh. The transformation distributes positions of vertices of the surface mesh into a spherical point cloud and maintains, in the distribution, vertices neighborhoods of the surface mesh. The correction method also comprises meshing S20 the points of the spherical point cloud according to a triangular surface mesh. The triangular surface mesh presents the following properties: the union of the triangles of the triangular surface mesh forms the convex hull of the points of the spherical point cloud, and the intersection between any first triangle of the triangular surface mesh and any second triangle of the triangular surface mesh intersecting the first triangle is a vertex of the first triangle or an edge of the first triangle. The correction method also comprises mapping back S30 the meshing onto the vertices of the surface mesh by reversing the transformation.

Such a correction method improves the correction of topological defects on the surface mesh representing an organ that is homeomorphic to the sphere.

Indeed, the surface mesh represents an organ that is in reality homeomorphic to a sphere (for example a brain). Yet, the surface mesh itself may not be perfectly homeomorphic to a sphere; for instance, the surface mesh may present topological defects such as bridges and/or geometrical artifacts such as spikes. This may be due to errors in medical imagery techniques that have been used to obtain the mesh, e.g., numerical artifacts and/or noisy acquisition of the image. Applying S10 the transformation to the surface mesh allows to keep vertex information (in the form of a point) while not transforming the edges connecting each vertex, yet maintaining a spatial consistency between neighboring points. As the transformation maintains, in the distribution, vertices neighborhoods of the surface mesh, the spherical point cloud is not any random projection of the vertices onto the spherical point cloud, but rather maintains the interrelation of neighboring vertices. Moreover, as vertices in the surface mesh are indexed, the method maintains such index information along the distribution of positions , thereby the points of the spherical point cloud can be mapped back to the original geometry. Moreover, applying S10 the transformation to the surface mesh and the meshing S20 of the points of the spherical point cloud according to the triangular surface mesh having the above-mentioned properties, the vertices of the surface mesh are mapped to an object with a spherical topology (i.e., the triangular surface meshing of the points of the spherical point cloud). The meshing S20 is thus a closed shape which is homeomorphic to the sphere (and thus without topological defects). Furthermore, the mapping back S30 of the meshing (i.e. that obtained at S20) onto the vertices of the surface mesh generates an output mesh which has the geometrical distribution of the surface mesh, while also being homeomorphic to the sphere. Hence, the mapping back S30 of the meshing returns to the intended geometry of the organ, possibly up-to some correction of geometrical artifacts, which may be corrected with a processing of corresponding vertices of the geometrical artifacts (such as outlier vertices).

It is also proposed a method (also called "obtention method") for obtaining a surface model representing an organ that is homeomorphic to a sphere. The obtention method comprises obtaining a medical image of the organ. The obtention method also comprises obtaining a surface mesh from the medical image. The obtention method also comprises correcting topological defects on the surface mesh according to the correction method. The obtention method may obtain the medical image by a medical imaging process. For example, the medical image may be an MRI image obtained by a magnetic resonance imaging process. The method may comprise performing this magnetic resonance imaging process as a pre-processing, in which case, the method may perform this process. For example, the method may send instructions to another computer system for performing magnetic resonance imaging acquisition and obtaining the MRI image.

Obtaining the surface mesh may comprise obtaining a tissue mask from the medical image. The tissue mask may comprise a 3D grid of voxels having the same size as the medical image. Each voxel of the tissue mask may be associated with a label linked to a tissue of the organ. Obtaining the surface mesh may then comprise applying a mesh reconstruction method to the tissue mask. The mesh reconstruction method may be any method for generating a surface mesh (e.g., triangular surface mesh) from the tissue mask. The mesh reconstruction method may take as input the tissue mask and return a (e.g., triangular) mesh representing the contour of the mask (for example, the border between gray matter voxels and white matter voxels, when the medical image corresponds to an MRI of the brain). In examples, obtention method may obtain the medical image by the medical imaging process and obtaining the tissue mask from the medical image.

The correction method and/or the obtention method are computer-implemented. This means that steps (or substantially all the steps) of the method are executed by at least one computer, or any system alike. Thus, steps of the above-mentioned methods are performed by the computer, possibly fully automatically, or, semi-automatically. In examples, the triggering of at least some of the steps of the method may be performed through user-computer interaction. The level of user-computer interaction required may depend on the level of automatism foreseen and put in balance with the need to implement user's wishes. In examples, this level may be user-defined and/or pre-defined.

A typical example of computer-implementation of a method is to perform the method with a system adapted for this purpose. The system may comprise a processor coupled to a memory and a graphical user interface (GUI), the memory having recorded thereon a computer program comprising instructions for performing the correction method and/or the obtention method. The memory may also store a database. The memory is any hardware adapted for such storage, possibly comprising several physical distinct parts (e.g., one for the program, and possibly one for the database).

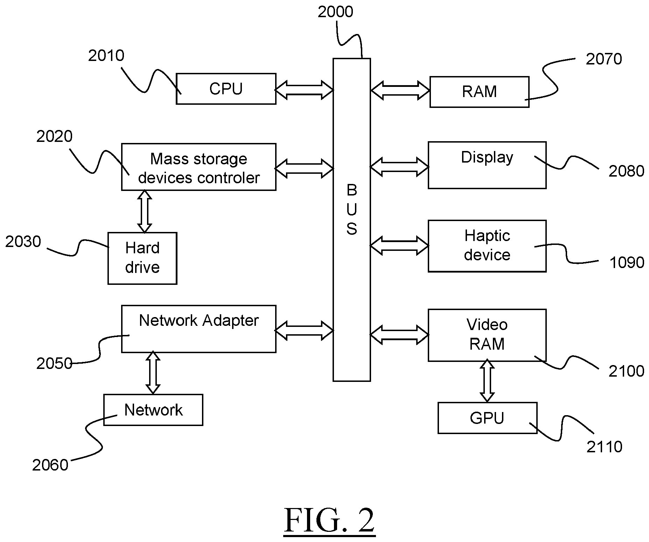

FIG. 2 shows an example of the system, wherein the system is a client computer system, e.g., a workstation of a user.

The client computer of the example comprises a central processing unit (CPU) 2010 connected to an internal communication BUS 2000, a random-access memory (RAM) 1070 also connected to the BUS. The client computer is further provided with a graphical processing unit (GPU) 2110 which is associated with a video random access memory 2100 connected to the BUS. Video RAM 2100 is also known in the art as frame buffer. A mass storage device controller 2020 manages accesses to a mass memory device, such as hard drive 2030. Mass memory devices suitable for tangibly embodying computer program instructions and data include all forms of nonvolatile memory, including by way of example semiconductor memory devices, such as EPROM, EEPROM, and flash memory devices; magnetic disks such as internal hard disks and removable disks; magneto-optical disks. Any of the foregoing may be supplemented by, or incorporated in, specially designed ASICs (application-specific integrated circuits). A network adapter 2050 manages accesses to a network 2060. The client computer may also include a haptic device 2090 such as cursor control device, a keyboard or the like. A cursor control device is used in the client computer to permit the user to selectively position a cursor at any desired location on display 2080. In addition, the cursor control device allows the user to select various commands, and input control signals. The cursor control device includes a number of signal generation devices for input control signals to system. Typically, a cursor control device may be a mouse, the button of the mouse being used to generate the signals. Alternatively, or additionally, the client computer system may comprise a sensitive pad, and/or a sensitive screen.

The computer program may comprise instructions executable by a computer, the instructions comprising means for causing the above system to perform the correction method and/or the obtention method. The program may be recordable on any data storage medium, including the memory of the system. The program may for example be implemented in digital electronic circuitry, or in computer hardware, firmware, software, or in combinations of them. The program may be implemented as an apparatus, for example a product tangibly embodied in a machine-readable storage device for execution by a programmable processor. Method steps may be performed by a programmable processor executing a program of instructions to perform functions of the method by operating on input data and generating output. The processor may thus be programmable and coupled to receive data and instructions from, and to transmit data and instructions to, a data storage system, at least one input device, and at least one output device. The application program may be implemented in a high-level procedural or object-oriented programming language, or in assembly or machine language if desired. In any case, the language may be a compiled or interpreted language. The program may be a full installation program or an update program. Application of the program on the system results in any case in instructions for performing the method. The computer program may alternatively be stored and executed on a server of a cloud computing environment, the server being in communication across a network with one or more clients. In such a case a processing unit executes the instructions comprised by the program, thereby causing the method to be performed on the cloud computing environment.

The method is for correcting topological defects on a surface mesh representing an organ that is homeomorphic to a sphere. This means that the method takes as input the surface mesh which may comprise at least one topological defect. By topological defect on the surface mesh, it is meant any portion of the surface mesh which modifies the topology of the organ that is supposed to represent, that is, any topological feature that makes the surface mesh differ from being homeomorphic to the sphere. The method outputs a mesh which is homeomorphic to the sphere, also called genus 0 surface.

The surface mesh designates any three-dimensional graph structure, with vertices (3D positions) and edges (e.g., segments) linking vertices two-by-two and forming so-called faces of the mesh (i.e., a face being the smallest cycle of edges). The faces may be formed from at least three vertices (e.g., three vertices or more than three vertices, like four vertices). The surface mesh may comprise (e.g., consist of) a triangular surface mesh. That is, the faces of the triangular surface mesh may be formed with three vertices, thus triangle faces. At least a portion of the triangular surface mesh may result from triangulating a portion of a non-triangular mesh, e.g., comprising faces formed from four vertices or more (such as polygonal faces). The portion of the triangular mesh may be obtained from any known triangulation method, such as Delaunay triangulation. The surface mesh may be a Delaunay surface mesh. The vertices may be indexed. The method may obtain information on the index of each vertex.

The surface mesh may have geometrical and topological features representative of the organ. By geometrical features it is meant any portion of the surface mesh (e.g., a face of the surface mesh) representing the geometrical shape (e.g., the spatial distribution such as a convex or non-convex spatial distribution) of the outer boundary of the organ. By topological features it is meant any portion of the surface mesh representing a topological invariant, e.g., representing by a hole or gap in geometrical space. The topological invariant may be determined from Euler's characteristic of the surface mesh. For example, denoting as V the numbers of vertices of the surface mesh, F the numbers of faces of the surface mesh and E the numbers of edges of the surface mesh, Euler's characteristic of the surface mesh may be determined according to the formula $V - E + F$.

The surface mesh represents an organ that is homeomorphic to the sphere, that is, the organ has an Euler's characteristic equal to two. The surface mesh thus has topological and geometrical features that are representative of the morphological properties of the organ. By "organ" it is meant a full organ, or in examples, a portion of the organ, the portion being homeomorphic to the sphere. An example of an organ homeomorphic to the sphere is the brain, which includes, e.g., the forebrain, midbrain, hindbrain, and intra-ventricular cerebrospinal fluid delimited by the medulla. An example of the portion of the organ may be a right hemisphere of the brain. Other examples of organs homeomorphic to the sphere may include for example, eyes or liver.

The topological defect may thus be any portion on the surface mesh which makes that Euler's characteristic of the surface mesh differ from two. Hence, the method corrects topological defects by applying any operation on the surface mesh so that the surface mesh has the same Euler's characteristic of the sphere, in other words, so that it is homeomorphic to the sphere. The surface mesh may also comprise geometrical artifacts. A geometrical artifact may be any geometrical feature which may comprise vertices which are irregular (e.g., with respect to its 3D position) with respect to other vertices of the surface mesh, such as outlier vertices. As the vertices of the geometrical artifact are irregular, these do not affect the topology of the mesh, although these vertices are anatomically incorrect. The surface mesh is obtained from a medical image. By "obtaining", it is meant that the mesh may stem from a medical image according to any suitable process that yields a surface mesh of an organ based on a medical image of such organ. For example, the process may comprise obtaining the image from an MRI imaging process. The process may also comprise obtaining a tissue mask on the medical image and performing 3D reconstruction on the tissue mask. The method may comprise such a process as a pre-processing on the medical image, e.g., any type of data acquisition that allows the retrieval or obtention of the surface mesh by the correction method. The correction method may obtain the surface mesh from an image acquisition process, e.g., by a user (such as a medical practitioner). The medical image may be an MRI image. An MRI image may comprise 3D grid of voxels. Each voxel may be associated with a gray level reflecting a tissue characteristic of the organ.

In examples, topological defects present on the surface mesh may arise from artifacts due to noise during the acquisition of the medical image. For example, a topological defect may consist of bridges or gaps, which are not representative of an organ homeomorphic to the sphere, such as is the case of the brain.

Alternatively, and/or additionally, obtaining the surface mesh may for example comprise downloading/retrieving (e.g. through a network) said surface mesh from a (e.g., distant) memory or server or any non-volatile storage where these data have been stored.

The transformation applied S10 to the surface mesh may result in a bijection mapping vertex of the surface mesh to respective positions of the spherical point cloud. In other words, a respective (3D) position of the spherical point cloud corresponds to a respective vertex of the surface mesh. The transformation maintains, in the distribution, vertices neighborhoods of the surface mesh. By vertex neighborhood it is meant a set of vertices of the surface mesh being connected by at least one edge. Two vertices are said to be neighbors if these are linked with an edge. By "maintaining vertices neighborhood" it is meant that as a result of the transformation, points that become neighbors on the spherical point cloud are maintained as neighbors, for example a vertices of a topological defect in the mesh may become neighbors with other vertices not part of the topological defect.. In other words, for a given vertex, the transformation maps at least one of its neighbors to a corresponding position on the spherical point cloud closer than any other non-neighbor vertex on the surface mesh. As will be detailed below, the transformation may be constrained by a vertex neighborhood preservation constraint.

The spherical point cloud, resulting from the transformation applied on S10, may be a set of points in 3D space having a spherical distribution. In other words, the points of the spherical point cloud each have a position belonging to a spherical shape, e.g., an ovoid shape or a perfect sphere shape. The transformation S10 may position the points on the boundary of the spherical shape, modulo some numerical tolerance.

The correction method meshes S20 the points of the spherical point cloud. In other words, the meshing S20 takes the points of the spherical point cloud and outputs a mesh where each vertex corresponds to a point of the spherical point cloud (which is obtained from the transformation S10).

The meshing S20 may be according to a triangular surface mesh. The triangular surface mesh presents the following properties: the union of the triangles of the triangular surface mesh forms the convex hull of the points of the spherical point cloud. The convex hull is the smallest convex polyhedron (bounded polytope) containing all vertices of the spherical point cloud. Additionally, the intersection between any first triangle of the triangular surface mesh and any second triangle of the triangular surface mesh intersecting the first triangle is a vertex of the first triangle or an edge of the first triangle. By construction, the meshing S20 is homeomorphic to the sphere. In examples, the correction method may perform the meshing 520, by using a Delaunay triangulation method. Thereby, the triangular surface mesh may be a Delaunay triangular surface mesh.

The meshing S20 of the point cloud may be performed according to any method, for example any convex hull meshing method, as known in the art.

The correction method maps back S30 the meshing (that is, the resulting mesh obtained from the meshing S20) onto the vertices of the surface mesh by reversing the transformation. In other words, the correction method maps positions of vertices of the meshing S20 (the vertices of the resulting mesh corresponding to points of the spherical point cloud) to positions of vertices of the surface mesh (in 3D space) and obtains a new mesh that results from the reversed transformation. By construction, i.e., due to applying the transformation 510, the vertices of the meshing S20 have a one-to-one correspondence with vertices of the surface mesh. Hence, the vertices that result from the reversed transformation S30 form a mesh where the edges linking the vertices correspond to the edges linking vertices on the meshing determined 520, although deformed to fit the spatial distribution set by the vertices of the surface mesh. In other words, the meshing (resulting from the reversed transformation) has the geometric features of the obtained surface mesh. However, as the vertices resulting from the reversed transformation are all linked due to inheriting the triangular surface mesh, it is homeomorphic to the sphere by construction.

This results in that the correction method improves the correction of topological defects on the surface mesh representing an organ that is homeomorphic to the sphere.

Indeed, thanks to applying the transformation to the surface mesh and the meshing of the points of the spherical point cloud, vertices of the surface mesh, which may not be homeomorphic to the sphere (for example when topological defects exists, e.g., in the case of holes or arcs or bridges) are mapped to a spherical point cloud topology. Next, the correction method creates a new meshing of the points of the spherical point cloud which is, by construction, a new mesh that is homeomorphic to the sphere. As the meshing is created according to the triangular surface mesh, the meshing is a closed object by construction. For example, if the surface mesh comprises the main body (representing the organ) an arc (representing a topological defect), after the meshing the vertices of the arc are now connected vertices of the main body. Hence, the meshing S20 gives a correct topology. The mapping back of the meshing onto vertices of the surface mesh endows the meshing S20 (with the corrected topology) with the geometrical distribution of the (original) surface mesh. In other words, the mesh that results from the reversed transformation corrects topological defects while returning to the intended geometry e.g., possibly up-to some remaining geometrical artifacts, which do not require further modification of the topology of the meshing.

In addition, as the meshing resulting from the reversed transformation is meshed according to the triangular surface mesh, the meshing is relatively uniform, so that it avoids consuming large memory. Moreover, efficiency is improved as the complexity of the algorithm is not dependent of the number of topological defects such as bridges or gaps (that is, one run of the algorithm corrects the topological defects in one shot). As the method is independent of the number of topological defects, does not need to perform further optimization. Indeed, the method may obtain a result in a relatively low number of minutes, e.g., two minutes.

The correction method may further comprise identifying outlier vertices that result from the reversed transformation. By "outlier vertex" it is meant any vertex, from the meshing that results from the reversed transformation, which is remote from other vertices resulting from the reversed transformation. By "remote", it is meant that the distance with respect to other vertices of the mesh resulting from the reversed transformation is greater than a relative distance between the other vertices of the mesh. The outlier vertices are thus part of geometrical artifacts which are not an accurate anatomical representation of the organ.

Hence, the correction method detects geometrical artifacts such as peaks in the mesh resulting from the transformation, which do not affect the topology of the mesh, however, have a geometry which is anatomically incorrect.

Identifying outlier vertices may comprise detecting vertices that are close on the meshing of the points of the spherical point cloud with respect to a Euclidean distance. The Euclidean distance is used as locally the sphere can be associated to a plane.

Additionally, the detected outlier vertices are remote in the mesh resulting from the reversed transformation with respect to the Euclidean distance on the mesh.

This further improves the determination of outlier vertices. Indeed, outlier vertices are comprised in geometrical artifacts, which are non-smooth and are thus not an anatomically correct representation of an organ homeomorphic to the sphere. It has been appreciated by the inventors that vertices that are close on the meshing of the points of the spherical point cloud should also be close in the mesh resulting from the reversed transformation with respect to the Euclidean distance, as this results in that the meshing is sufficiently smooth.

The correction method may further comprise computing ratios between lengths of edges linking vertices on the meshing of the points of the spherical point cloud and lengths of edges linking vertices on the reversed transformation. The lengths of edges linking vertices on the meshing of the points of the spherical point cloud are measured with the Euclidean distance on the sphere. The lengths of edges linking vertices on the reversed transformation are measured with the Euclidean distance on the mesh. A ratio may be a quotient between the lengths of edges linking, e.g., two vertices, on the meshing of the points of the spherical point cloud and lengths of edges linking, e.g., two vertices on the reversed transformation.

Detecting vertices that are close on the meshing of the points of the spherical point cloud with respect to the Euclidean distance on the sphere and which are remote in the mesh resulting from the reversed transformation with respect to the Euclidean distance (corresponding to outlier vertices) may comprise determining if the ratios are above a predetermined threshold. For example, the quotient may be a fraction having as numerator the length of edges linking a first vertex and a second vertex on the reversed transformation and as denominator the length of edges linking the corresponding vertices corresponding to first vertex and the second vertex on the meshing of the points of the spherical point cloud (that is, prior to reversing the transformation). The predetermined threshold may be chosen in any arbitrary manner, for example a non-negative number such as 3 or 5 or greater.

This provides an efficient manner of detecting outlier vertices, as the detection is made according to the magnitude of the ratio, i.e., if the ratio is above the predetermined threshold.

The correction method may further comprise processing the identified outlier vertices. By processing it is meant a set of operations that may be applied by the correction method on the outlier vertices that result from the reversed transformation. The set of operations may comprise, for example, displacing vertices, filtering, smoothing, remeshing, beveling, cropping and/or applying Boolean operations on the outlier vertices. The processing may reduce the distance between the identified outlier vertices with respect to remaining vertices of the reversed transformation. In other words, the correction method may process the identified outlier vertices so that these are no longer remote in the mesh resulting from the reversed transformation. For example, reducing the distance may comprise processing the outlier vertices so that the ratios between lengths of edges linking outlier vertices on the meshing of the points of the spherical point cloud and lengths of edges linking outlier vertices on the reversed transformation are lower than the predetermined threshold.

This improves the accuracy of the meshing that results from the reversed transformation. Indeed, the mesh resulting from the processing corrects the geometrical aberrations induced by the outlier vertices, which are not anatomically accurate. This allows continuous adaptation of the artifacts onto the rest of the mesh.

The processing may comprise smoothing of the identified outlier vertices. For example, the correction method may set each outlier vertex to a weighted average position of its neighbors. Alternatively, or additionally, the correction method may also comprise cropping of the identified outlier vertices.

The processing may apply a smoothing of the vertices. The method may gather the set of outlier vertices on the meshing of the points of the spherical point cloud as a set $\mathbb{P}$ .

The method adds to the vertices of the set $\mathbb{P}$ , the p-neighbors all vertices of $\mathbb{P}$ . The new set of vertices to modified can be called $\mathbb{P}$ '.

The method may iterate over the vertices in P' to update their positions on the surface. The iteration may apply an update force. The update force may be derived from the analogy to a spring with infinite stiffness. For each $v \in \mathbb{P}'$, the method may update the position of with the formula:

$$B(v) = \frac{1}{2 \,\#\big(\mathcal{N}_B(v)\big)} \sum_{v' \in \mathcal{N}_B(v)} B(v').$$

This further improves the accuracy of the meshing. Indeed, the outlier vertices are adjusted to be continuous with respect to the remaining vertices, thereby improving anatomical accuracy.

The method may further comprise selecting vertices from the reversed transformation remaining from the identified outlier vertices. In other words, the method selects the vertices not part of the identified outlier vertices. The method may re-mesh the selected vertices after the mapping S30 according to the topology of the surface mesh. This means that the selected vertices are re-meshed so that they define a topology on the reversed transformation that corresponds to the topology of the surface mesh.

In examples, the method may perform the re-meshing on vertices remaining from the vertices included the set $\mathbb{P}$ and in the set $\mathbb{P}$ '. Moreover, after performing the re-meshing, the method may triangulate remaining parts of the mesh that are not triangles, for example at the border of the vertices comprised in the set $\mathbb{P}$ ', as the re-meshing may introduce non-triangles due to the fusion of two different meshes.

This ensures that the output of the method respects the original mesh topology on parts not comprising topological defects. Thereby, the method avoids creating a surface meshes that have different topology, in other words, different connections between vertices, also known as edge flipping.

Applying S10 the transformation may comprise, iteratively inflating the surface mesh into a spherical point cloud. By iteratively inflating the mesh it is meant that the correction method may start by setting an initial point cloud $C_t$ (with $t = 0$) based on the surface mesh. For example, the correction method may sample vertices v (e.g., all of the vertices) of the surface mesh to construct the initial point cloud by applying the transformation on the surface mesh on each of the sampled vertices $C_t(v)$. The correction method may then proceed to iteratively updating the positions of $C_t(v)$ so that the points are distributed along a spherical shape. For example, the correction method may define an updated position $C_{t+1}$ which modifies the position $C_t$ according to an iteration rule. The iteratively inflating may use an inflation transformation constrained by a vertex neighborhood preservation constraint. A vertex neighborhood may be a set of vertices of the surface mesh where each vertex of the set sharing at least one edge with another edge of the surface mesh (called a neighbor).

The vertex neighborhood preservation constraint may be any constraint that preserves the vertex neighborhood when applying the transformation S10. The constraint thus maps, for a corresponding vertex, at least one (e.g., all ) of its neighbors to a corresponding position on the spherical point cloud closer than any other non-neighbor vertex on the surface mesh For example, given a vertex v and a vertex v' not belonging to a vertex neighborhood of the surface mesh comprising a vertex v, the vertex neighborhood preservation constraint may constrain the application of the transformation to the vertex v' so that its position on the spherical point cloud $C_t(v')$ is separated from the position $C_t(v)$ of the vertex v with a distance greater than the distance between the position $C_t(v)$ with respect to the position of each of the vertices comprised in the neighborhood comprising the vertex v on the spherical point cloud.

The correction method thus ensures that the transformation does not project randomly the points on to a sphere.

The vertex neighborhood preservation constraint may be of the type:

$$v' \notin \mathcal{N}_A(v) \Rightarrow d\big(C(v), C(v')\big) \geq \min\{d\big(C(v), C(v_1)\big), d\big(C(v), C(v_2)\big)\},$$

A denotes the surface mesh. v denotes a current vertex. $\mathcal{N}_A(v)$ represents the vertex neighborhood of the current vertex v in the surface mesh A. In other words, $\mathcal{N}_A(v)$ comprises the current vertex v and vertices sharing at least one edge. $v_1$ and $v_2$ denote vertices belonging to the vertex neighborhood $\mathcal{N}_A(v)$ of the current vertex v. v' denotes a vertex not belonging to the intersection of the vertices neighborhoods $\mathcal{N}_A(v_1)$ and $\mathcal{N}_A(v_2)$, and $\mathcal{N}_A(v)$. $C(v)$, $C(v')$, $C(v_1)$ and $C(v_2)$ denote positions of the vertices v, v', $v_1$, and $v_2$ on the spherical point cloud (resulting from applying the transformation on the vertices). $d(\cdot, \cdot)$ is a distance function (on the spherical point cloud). The symbol $\Rightarrow$ denotes the logical operator "implies that".

The constraint thus constrains the position $C(v')$ of any vertex v' not belonging to the vertex neighborhood $\mathcal{N}_A(v)$ so that the distance with respect to the current vertex v, $d(C(v), C(v'))$ (on the spherical point cloud), is greater than or equal than the minimum of the distances $d(C(v), C(v_1))$, $d(C(v), C(v_2))$, for any two vertices $v_1$ and $v_2$ belonging to the neighborhood $\mathcal{N}_A(v)$. The constraint is not respected by vertices which are part of topological defects.

The inflation transformation may be of the type, for each current vertex v:

$$C_{t+1}(v) = C_t(v) + \left( \boldsymbol{d}_v + \langle \boldsymbol{d}_v | \boldsymbol{n}_C(v) \rangle \, \boldsymbol{n}_S(v) + \lambda_r \frac{r_0 - |\boldsymbol{r}_v|}{r_0} \boldsymbol{r}_v \right),$$

wherein

$$d_v = \frac{1}{\#\mathcal{N}_A(v)} \sum_{v' \in \mathcal{N}_A(v)} C_t(v') - C_t(v),$$

$$r_v = C_t(v) - o_{t+1},$$

$C_t(v)$ and $C_t(v')$ denote positions of the vertices v and v' positioned on the spherical point cloud $S$, $C_{t+1}(v)$ denotes

$$d_v + \langle\, d_v | n_C(v) \rangle\, n_S(v) + \lambda_r \frac{r_0 - |r_v|}{r_0}\, r_v$$

the updated position of vertex v. ( ) denotes the iteration rule at which $C_{t+1}(v)$ updates the position $C_t(v)$.

A denotes the surface mesh, v denotes the current vertex, $\mathcal{N}_A(v)$ represents the vertex neighborhood of the current vertex v in the surface mesh $A$. $v'$ denotes a neighbor vertex of the set $\mathcal{N}_A(v)$. $\#\mathcal{N}_A(v)$ denotes the number of vertices in the set $\mathcal{N}_A(v)$. $o_{t+1} = \frac{1}{\#A}\sum_{v \in A} C_t(v)$ denotes an average position (e.g., a centroid) of vertices on the spherical point cloud $S$.

$n_S(v)$ denotes an outward normal of the current vertex v. $\langle d_v | n_C(v)\rangle$ denotes the inner product between $d_v$ and $n_C(v)$, $\lambda_r$ and $r_0$ are predetermined parameters. $\lambda_r$ may have values between 0.1 and 1, for example .25 or 0.9. $r_0$ may have values between 80 and 130, for example 100.

The inflation transformation thus "pushes outwards" the positions of vertices of the surface mesh with respect to the average position $o_{t+1}$ so that its 3D position approaches the distribution of a sphere. The correction method may set any number of iterations $t$, for example $t$ may have a number greater than 10, 100 or even 1000 or more. By construction, the method always terminates.

The correction method may first set a number t and apply sample the vertices of the surface mesh to an initial point cloud. The positions of points $C_t$ of the initial point cloud may correspond to the positions of the vertices of the surface mesh. In other words, at t = 0, $C_t$ the positions of the points on the point cloud correspond to the positions of the vertices of the

$$o_{t+1} = \frac{1}{\#A}\sum_{v \in A} C_t(v)$$

surface mesh. The correction method may then compute as the average position of vertex in $C_t$. Then, for each $v \in A$ the method may:

- compute $d_v$ and $r_v$;
- update $C_{t+1}(v)$; and
- stop the iteration when arriving to the number t of iterations.

Examples of the method are now discussed with reference to FIG.s 3 to 10.

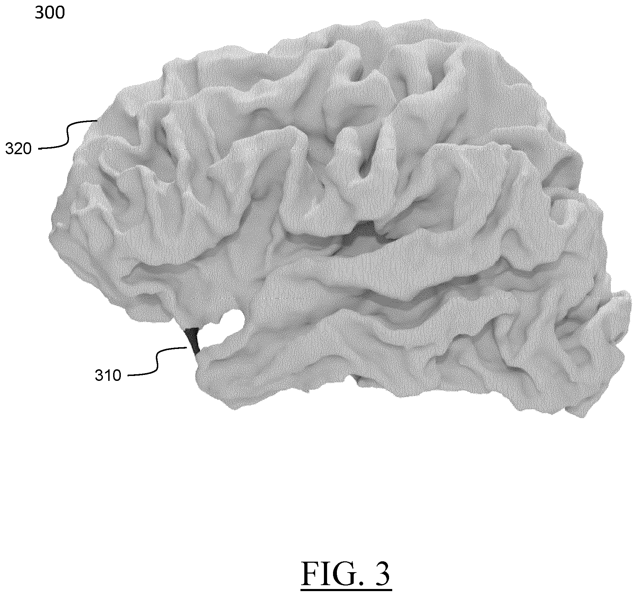

FIG. 3 illustrates a surface mesh 300 representing an organ that is homeomorphic to the sphere, namely a human brain hemisphere. The surface mesh 300 presents a bridge 310, which is a geometrical artifact that modifies the topology of the brain tissue representation 320, which should be homeomorphic to the sphere. There can also be other anatomical artifacts, meaning parts of the surface that are too steep to be anatomically correct (not shown), even if these are not topological defects.

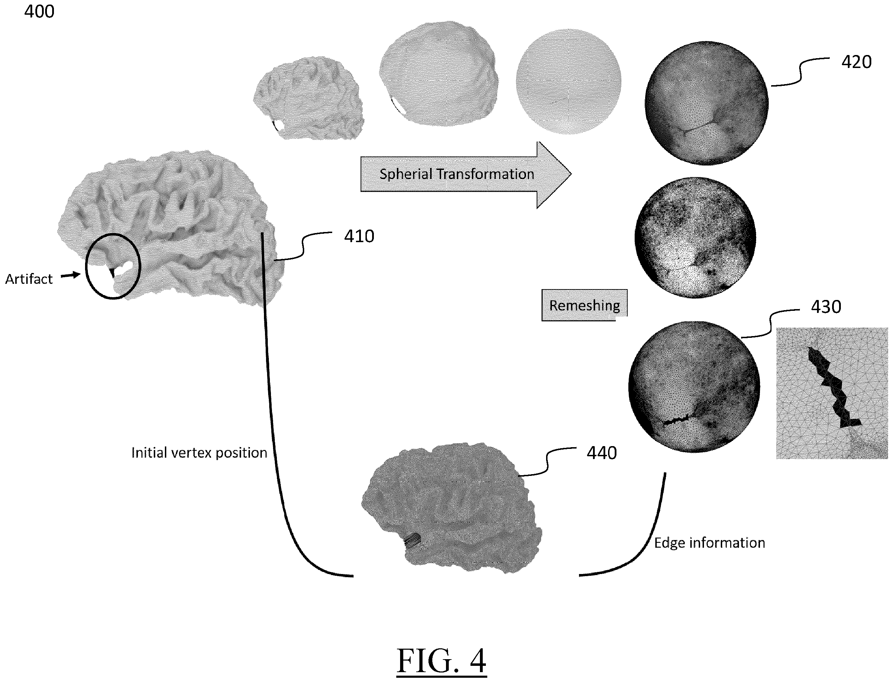

FIG. 4 illustrates an overview 400 of the correction method.

The method applies a transformation to the surface mesh 410 to obtain a spherical point cloud 420 containing the same number of points as the number of vertices of the surface mesh 410. Each vertex of the original surface is in a bijection with a point of the spherical point cloud. The points that are not artifacts respect a vertex neighborhood preservation constraint, which will be detailed hereunder.

The method meshes the spherical point cloud 420 according to a convex hull representation of the spherical point set, thereby obtaining a mesh 430 homeomorphic to a sphere.

Finally, the method obtains a new meshing 440 from the meshing obtained at 430 by applying ah inverse bijection to the vertices of the meshing 430. The method identifies, on the meshing 440, vertices that have an average edge length which is several times longer than the length of the original mesh 410. This set of vertices is corrected to avoid distortion with a smoothing pass.

The application of the transformation is now discussed.

Denoting $A(v)$ the spatial position of a vertex v in the surface mesh ($A$) and denoting C(v) the application of the transformation on the vertex as its position in the spherical set (S). Moreover, $\mathcal{N}_A(v)$ represents the set of neighbors of v in the mesh A (i.e., vertices connected by an edge to *v).*

The method sets each vertex of the original surface A will be in bijection with the sphere point cloud S. The process is made in order that areas that do not require topological correction respect the vertex neighborhood preservation constraint.

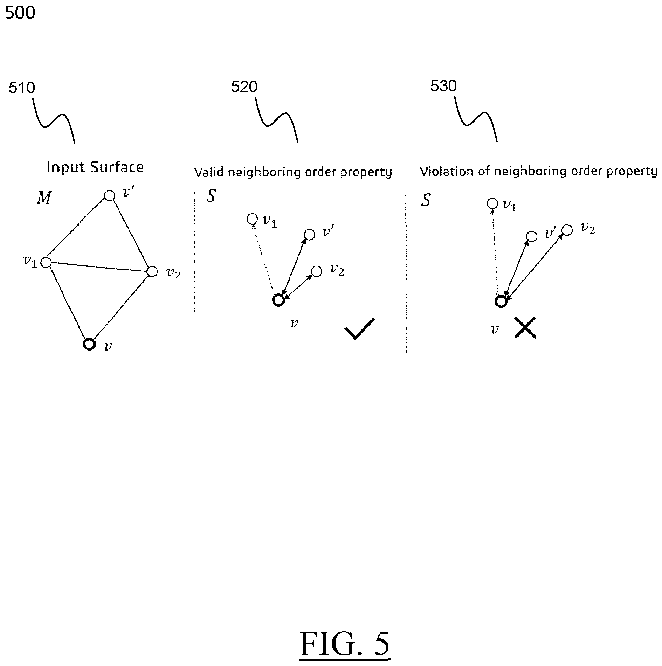

FIG. 5 illustrates the vertex neighborhood preservation constraint. As shown in 510, let be *v* a vertex of the input surface mesh A and $v_1$, $v_2$ be neighbors of v (i.e., members of the set $\mathcal{N}_A(v)$ sharing one edge with v). *v'* is not a neighbor of v as it does not directly share an edge with v. The vertices v and v' respect the vertex neighborhood preservation constraint if and only if:

For all $v_1, v_2 \in \mathcal{N}_A(v)$ (so that (*v*, $v_1$) and (*v*, $v_2$) are edges of the surface mesh), and for all $v' \in \mathcal{N}_A(v_1) \cap \mathcal{N}_A(v_2)$:

$$v' \notin \mathcal{N}_A(v) \Rightarrow d\big(C(v), C(v')\big) \geq \min\{d\big(C(v), C(v_1)\big), d\big(C(v), C(v_2)\big)\},$$

where d is the distance between this two points. 520 exemplifies a correct application of the vertex neighborhood preservation constraint, while 530 shows an incorrect application of the vertex neighborhood preservation constraint. As shown in 520, if a vertex v' is not a neighbor of the vertex v on the mesh, the method does not set its corresponding position closer to that of the position of at least one of the neighbors of v. Hence, the method avoids situations such as shown in 530, which shows that the vertex v' is mapped to a position, on the spherical point cloud, which is closer to the mapped position of v than its neighbors.

The inflation transformation is now discussed.

The computation of the positions of vertices C on the spherical point cloud is done by inflating the surface *A* step by step. $C_t$ represents the inflation of *A* at the step t.

Let $O_{t+1} = \frac{1}{\#A}\sum_{v\in A} C_t(v)$ denote the average position of vertex in $C_t$

For each G A, the method:

Computes:

$$d_v = \frac{1}{\#\mathcal{N}_A(v)} \sum_{v' \in \mathcal{N}_A(v)} C_t(v') - C_t(v)$$

$$r_v = C_t(v) - o_{t+1}$$

Updates the position of v in C as follows:

$$C_{t+1}(v) = C(v) + \left( d_v + \langle d_v | n_C(v) \rangle\, n_S(v) + \lambda_r \frac{r_0 - |r_v|}{r_0} r_v \right),$$

where $n_S(v)$ is the outward normal of the vertex v (i.e., the average of its belonging triangle normals). $\lambda_r$ and $r_0$ are parameters having values $\lambda_r = 0.25$, $r_0 = 100$. The method iterates 1000 times and then applies a spherical projection by computing, for all *v:*

$$r_v = C_{1000}(v) - o_{1000},$$

$$C(v) = o_{1000} + \frac{r_0}{|r_v|} r_v.$$

By constraint, the method distributes the set of vertices of the surface mesh a sphere with center $o_{1000}$.

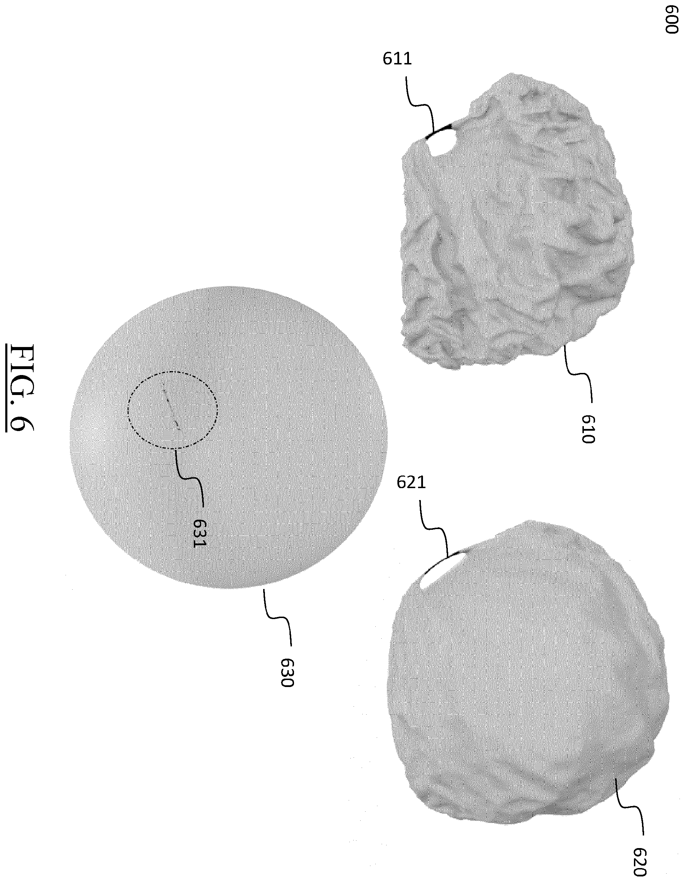

FIG. 6 exemplifies the inflation transformation 600. The inflation transformation may start with the initial surface, comprising the bridge 610 to be corrected with respect to the rest of the body 610. The method may compute the positions of vertices on the spherical point cloud by inflating the surface A (shown as a solid surface 620). The method may continue the updating of the position in the spherical point cloud until the body 630 is superposed with the bridge 631 (shown in dashed circle).

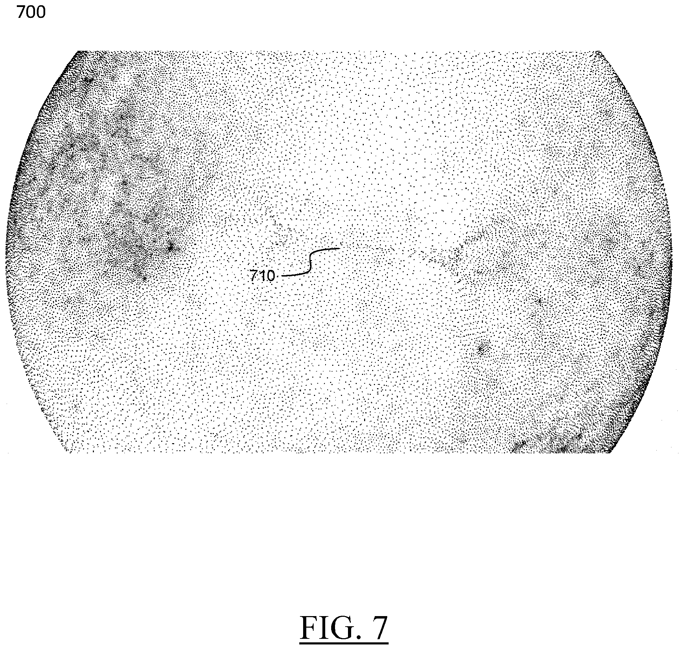

FIG. 7 exemplifies the spherical point cloud obtained by the correction method, applied to the surface mesh 300 (shown in FIG. 3). The method maps vertices of the bridge 310 to points 710 on the spherical point cloud as a result of applying the inflation transformation constrained by the vertex neighborhood preservation constraint.

The method thus maps a mesh comprising a topology non homeomorphic to the sphere into the spherical point cloud.

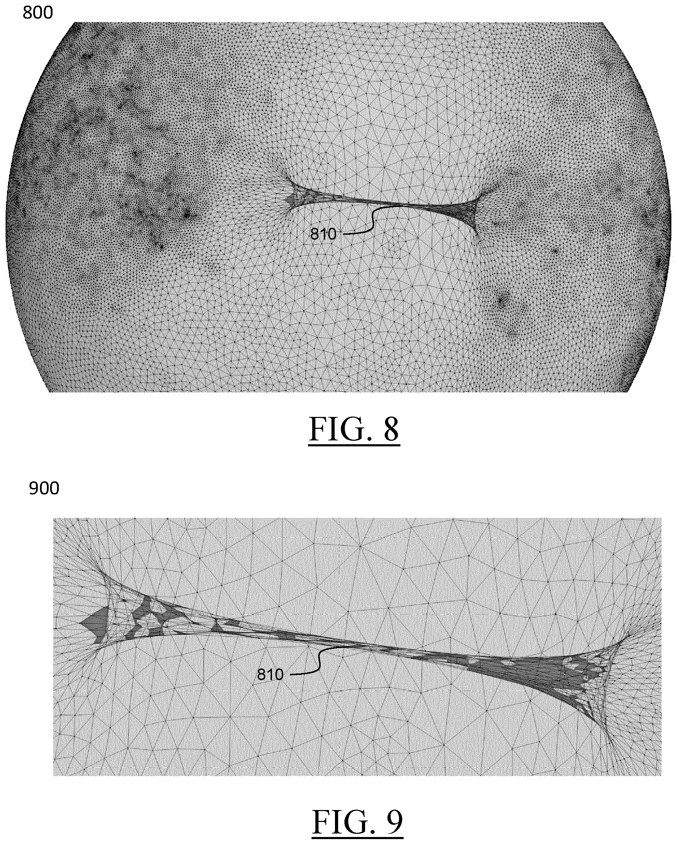

Reference is made to FIG.s 8 and 9, show for the sake of illustration how the surface mesh is deformed into a spherical mesh 800. Points 710 of the spherical point cloud correspond to vertices of the spherical mesh. Notably, it can be appreciated that the bridge 310 is stretched onto the sphere as a tunnel 810. FIG. 9 shows a zoomed view 900, comprising the tunnel 810. The figures are shown for the sake of illustration and are not further used by the method.

Rather, the method creates a new meshing from the spherical point cloud. Namely, the method next obtains a meshing from the spherical point cloud $C_B$, to obtain a topologically perfect sphere mesh, with the same vertex density as the density of points comprised in the spherical point cloud C.

The method uses a convex hull method such as a Delaunay triangulation, generating the convex hull surface of the point cloud C.

The convex hull method generates $C_B$, convex hull of C, which is by construction homeomorphic to a sphere.

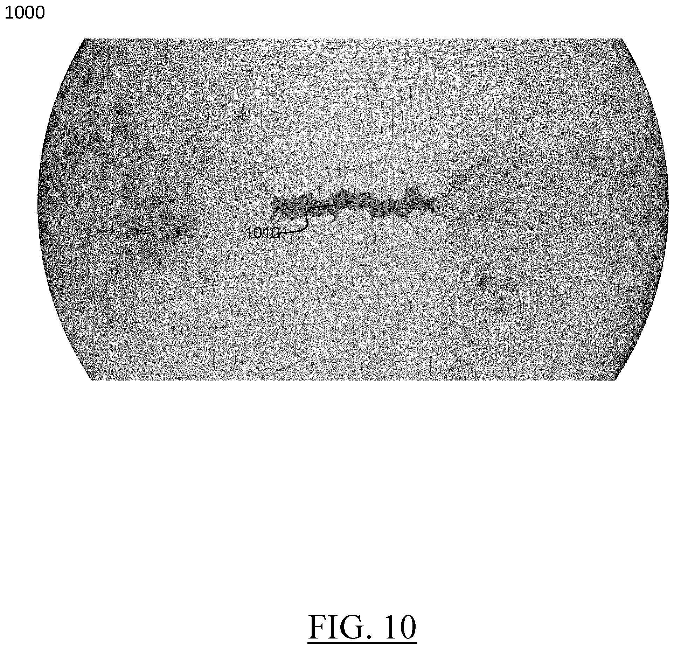

FIG. 10 shows an example of the convex hull meshing 1000. The correction method stitches points mapping the bridge 310 onto the spherical point cloud with the other points of the spherical point cloud, as shown in the darkened triangles 1010. As the triangles 1010 have been remeshed according to the convex hull, by construction the corresponding vertices do not respect the vertex neighborhood constraint.

Last step will focus on reconstructing the original surface A by removing topological detects and smoothing those vertices according to "correct" one's positions.

By applying the inverse of the bijection that was computed from A to C in A) part, the method re-meshes A vertices according to the meshing of $C_B$ the convex hull meshing of C. This generates a surface B similar to A.

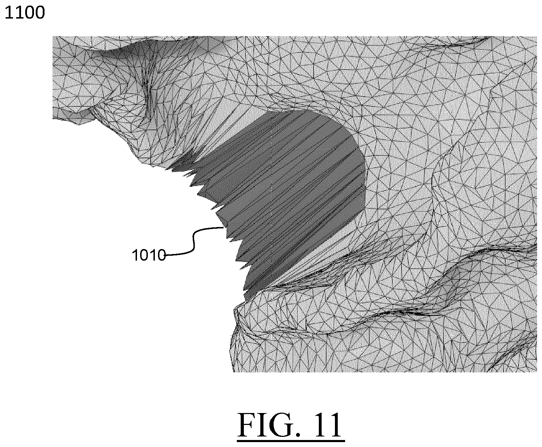

FIG. 11 shows a zoomed version of the meshing 1100 obtained by applying the inverse bijection. The edges obtained from the convex hull meshing 1010 are placed linking vertices at positions where the bridge 310 was found on the surface mesh. The meshing 1100 is now homeomorphic to the sphere, comprising artifacts which are the edges 1010.

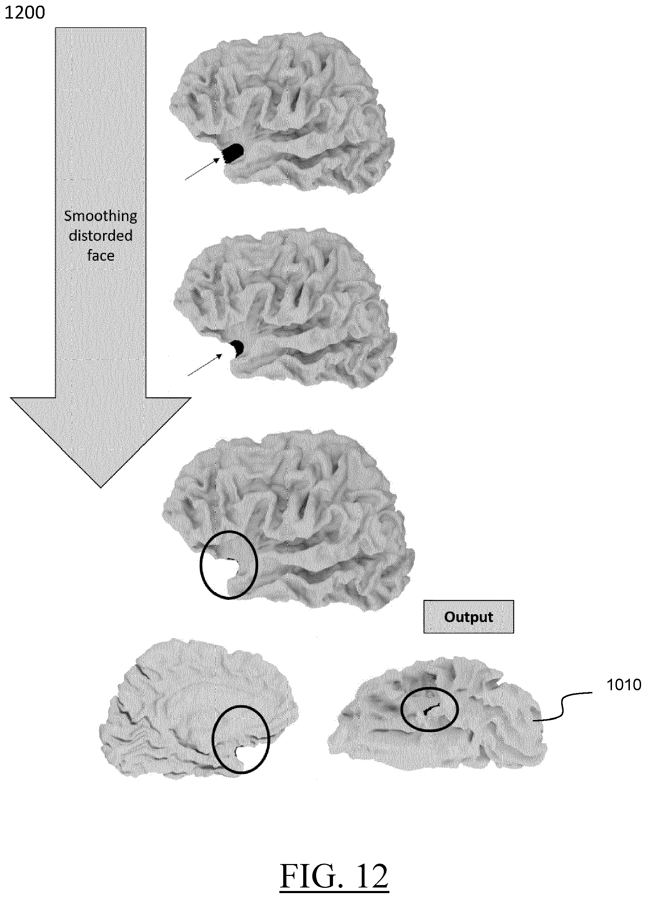

The method may automatically identify those artifact edges 910. Reference is made to FIG.12 showing a process 1200 for correcting those artifact edges. The artifact edges appear as vertices who were close on the spherical point cloud $C_B$ and are remote on the reversed transformation in terms of Euclidean distance on the mesh. The method may smooth the distorted faces by reducing the length of the edges and obtain an output 1210 which has an anatomically correct geometry.

Using this "abnormal length" property, one can detect those edges, by looking at the following ratio, with an arbitrary threshold of 5.

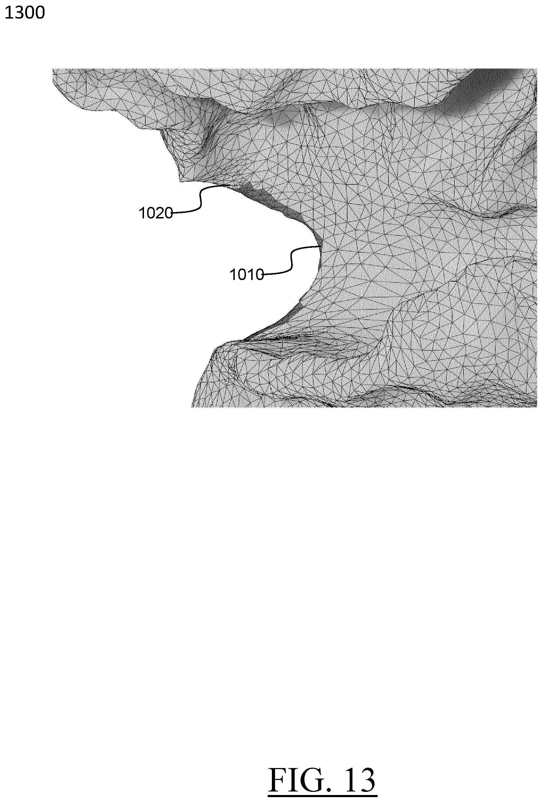

FIG. 13 shows the result of the smoothing 1300. The length of the edges 1010 is now reduced so as to have a similar length as neighboring edges 1020.

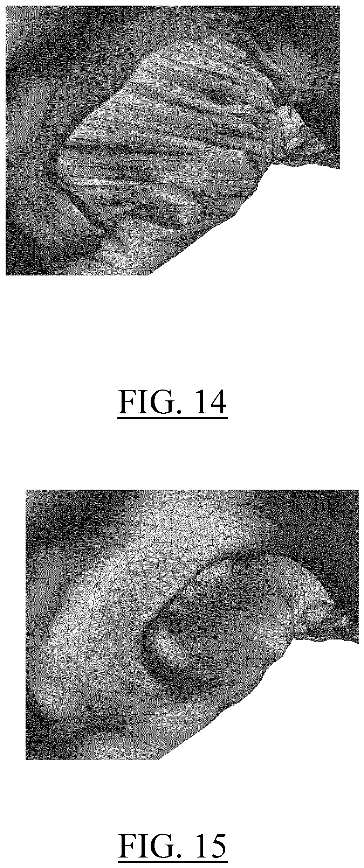

FIG. 14 and 15 show a full 3D view of the same edges. FIG. 14 shows the mesh prior to smoothing. FIG. 15 shows the edges after smoothing.

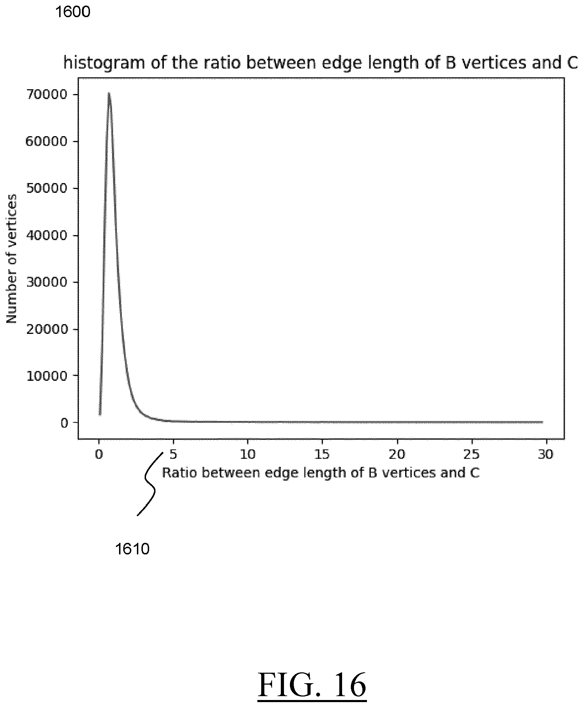

FIG. 16 shows a histogram 1600 of ratios between lengths of edges linking vertices on the meshing of the points of the spherical point cloud and lengths of edges linking vertices on the reversed transformation. In this example, the method may determine as 5 as an appropriate ratio value for smoothing edges above that value, based on the histogram. The number of edges linking vertices on the meshing of the points of the spherical point cloud and lengths of edges linking vertices on the reversed transformation decreases rapidly when the value 1610 of 5 increases.

Denoting as $\mathbb{P}$ the set of vertices (identified by their order in the mesh) of B identified as incorrect and whose positions will need to be modified for anatomical accuracy.

For better smoothing, the method adds to $\mathbb{P}$ the p-neighbours all vertices of $\mathbb{P}$, to allow continuous adaptation of the artifacts. The new set of vertices to modified can be called $\mathbb{P}$'.

The method then iterates over the vertices in $\mathbb{P}$' to update their position towards the surface. The update force is derived from the analogy to a spring with infinite stiffness:

For each $v \in \mathbb{P}'$, the method updates the position of with the formula:

$$B(v) = \frac{1}{2\,\#\big(\mathcal{N}_B(v)\big)} \sum_{v' \in \mathcal{N}_B(v)} B(v').$$

**Claims**

1. A computer-implemented method for correcting topological defects on a surface mesh representing an organ that is homeomorphic to a sphere, the surface mesh being obtained from a medical image, the method comprising:

   - applying (S10) a transformation to the surface mesh, the transformation distributing positions of vertices of the surface mesh into a spherical point cloud and maintaining, in the distribution, vertices neighborhoods of the surface mesh;
   - meshing (S20) the points of the spherical point cloud according to a triangular surface mesh, the triangular surface mesh presenting the following properties:

     -- the union of the triangles of the triangular surface mesh forms the convex hull of the points of the spherical point cloud, and
     -- the intersection between any first triangle of the triangular surface mesh and any second triangle of the triangular surface mesh intersecting the first triangle is a vertex of the first triangle or an edge of the first triangle;

   - mapping back (S30) the meshing onto the vertices of the surface mesh by reversing the transformation.

2. The method of claim 1, further comprising identifying outlier vertices that result from the reversed transformation.

3. The method of claim 2, wherein identifying outlier vertices comprises detecting vertices that are close on the meshing of the points of the spherical point cloud with respect to a Euclidean distance on the sphere and which are remote in the mesh resulting from the reversed transformation with respect to the Euclidean distance on the mesh.

4. The method of claim 3, further comprising computing ratios between lengths of edges linking vertices on the meshing of the points of the spherical point cloud and lengths of edges linking vertices on the reversed transformation, the detecting comprising determining if the ratios are above a predetermined threshold.

5. The method of claims 2 to 4, further comprising processing the identified outlier vertices, the processing reducing the distance between the identified outlier vertices with respect to remaining vertices of the reversed transformation.

6. The method of claim 5, wherein the processing comprises one or more of a smoothing of the identified outlier vertices or a cropping of the identified outlier vertices.

7. The method of claims 2 to 6, further comprising selecting vertices from the reversed transformation remaining from the identified outlier vertices, and re-meshing the selected vertices according to the topology of the surface mesh.

8. The method of claims 1 to 7, wherein applying (S10) the transformation comprises, iteratively inflating the mesh into a spherical point cloud, using an inflation transformation constrained by a vertex neighborhood preservation constraint.

9. The method of claim 8, wherein the inflation transformation is of the type, for each current vertex v:

$$C_{t+1}(v) = C_t(v) + \left( \boldsymbol{d}_v + \langle\, \boldsymbol{d}_v | \boldsymbol{n}_C(v) \,\rangle\, \boldsymbol{n}_S(v) + \lambda_r \frac{r_0 - |\boldsymbol{r}_v|}{r_0} \boldsymbol{r}_v \right),$$

wherein

$$d_v = \frac{1}{\#\mathcal{N}_A(v)} \sum_{v' \in \mathcal{N}_A(v)} C_t(v') - C_t(v),$$

$$r_v = C_t(v) - o_{t+1},$$

where A denotes the surface mesh, v denotes the current vertex, $\mathcal{N}_A(v)$ represents the vertex neighborhood of the current vertex v in the surface mesh $A$, $v'$ denotes a neighbor vertex of the set $\mathcal{N}_A(v)$, $\#\mathcal{N}_A(v)$ denotes the number of vertices in the set $\mathcal{N}_A(v)$, $C_t(v)$ and $C_t(v')$ denote positions of the vertices v and v' positioned on the spherical point cloud $S$, $C_{t+1}(v)$ denotes the updated position of vertex v, $o_{t+1} = \frac{1}{\#A}\sum_{v \in A} C_t(v)$ denotes an average position of vertices on the spherical point cloud $S$, $n_S(v)$ denotes an outward normal of the current vertex v, $\langle d_v | n_C(v) \rangle$ denotes the inner product between $d_v$ and $n_C(v)$, $\lambda_r$ and $r_0$ are predetermined parameters.

10. The method of claim 8 or 9, wherein the vertex neighborhood preservation constraint is of the type:

$$v' \notin \mathcal{N}_A(v) \Rightarrow d\big(C(v), C(v')\big) \geq \min\{d\big(C(v), C(v_1)\big), d\big(C(v), C(v_2)\big)\},$$

wherein A denotes the surface mesh, v denotes a current vertex, $\mathcal{N}_A(v)$ represents the vertex neighborhood of the current vertex v in the surface mesh $A$, $v_1$ and $v_2$ denote vertices belonging to the vertex neighborhood $\mathcal{N}_A(v)$ of the current vertex v, v'denotes a vertex not belonging to the intersection of the vertices neighborhoods $\mathcal{N}_A(v_1)$ and $\mathcal{N}_A(v_2)$, and $d(\cdot, \cdot)$ is a distance function.

11. A method for obtaining a surface model representing an organ that is homeomorphic to a sphere, the obtention method comprising:

- obtaining a medical image of the organ;
- obtaining a surface mesh from the medical image;
- correcting topological defects on the surface mesh according to the method of any one of claims 1 to 10.

12. The method of claim 11, wherein obtaining the surface mesh comprises obtaining a tissue mask from the medical image and applying a mesh reconstruction method to the tissue mask.

13. A computer program comprising instructions for performing the method of any of claims 1 to 10 and/or the obtention method of claim 11 or 12.

14. A computer readable storage medium having recorded thereon a computer program of claim 13.

15. A system comprising a processor coupled to a memory, the memory having recorded thereon the computer program of claim 13.

| Applying a transformation to the surface mesh | S10 |

| Meshing the points of the spherical point cloud according to a triangular surface mesh | S20 |

| Mapping back the meshing onto the vertices of the surface mesh by reversing the transformation | S30 |

## FIG. 1

2000

2010

CPU

2070

RAM

2020

Mass storage
devices controler

Display

2080

2030

Hard
drive

B
U
S

Haptic
device

1090

Network Adapter

Video
RAM

2100

2050

Network

GPU

2110

2060

# FIG. 2

300

320

310

FIG. 3

FIG. 4

500

510

520

530

Input Surface

Valid neighboring order property

Violation of neighboring order property

FIG. 5

FIG. 6

600

611

610

621

620

631

630

700

FIG. 7

800

FIG. 8

900

FIG. 9

1000

FIG. 10

1100

1010

## FIG. 11

1200

Smoothing
distorded
face

Output

1010

FIG. 12

1300

FIG. 13

FIG. 14

FIG. 15

1600

histogram of the ratio between edge length of B vertices and C

1610

FIG. 16

| Europäisches Patentamt / European Patent Office / Office européen des brevets | **EUROPEAN SEARCH REPORT** | Application Number |
|---|---|---|
| | | **EP 23 30 6499** |

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | YOTTER RACHEL AINE ET AL: "Topological correction of brain surface meshes using spherical harmonics", HUMAN BRAIN MAPPING, vol. 32, no. 7, 27 July 2010 (2010-07-27), pages 1109-1124, XP093140219, ISSN: 1065-9471, DOI: 10.1002/hbm.21095 * abstract; figures 2, 5, 6 * * page 4 - page 9 * | 1-15 | INV. G06T17/20 G06T19/20 |
| A | FISCHL B ET AL: "AUTOMATED MANIFOLD SURGERY: CONSTRUCTING GEOMETRICALLY ACCURATE ANDTOPOLOGICALLY CORRECT MODELS OF THE HUMAN CEREBRAL CORTEX", IEEE TRANSACTIONS ON MEDICAL IMAGING, IEEE, USA, vol. 20, no. 1, 1 January 2001 (2001-01-01), pages 70-80, XP001003255, ISSN: 0278-0062, DOI: 10.1109/42.906426 * abstract * | 1-15 | |
| A | SUN LIANG ET AL: "Topological correction of infant white matter surfaces using anatomically constrained convolutional neural network", NEUROIMAGE, vol. 198, 1 September 2019 (2019-09-01), pages 114-124, XP093140238, AMSTERDAM, NL ISSN: 1053-8119, DOI: 10.1016/j.neuroimage.2019.05.037 Retrieved from the Internet: URL:https://doi.org/10.1016/j.neuroimage.2019.05.037> * abstract * | 1-15 | TECHNICAL FIELDS SEARCHED (IPC) G06T |

The present search report has been drawn up for all claims

| Place of search | Date of completion of the search | Examiner |
|---|---|---|
| The Hague | 11 April 2024 | Martos Riaño, Demian |